# EUROPÄISCHE PATENTSCHRIFT

(11) **EP 2 251 406 B1**
(45) Veröffentlichungstag und Bekanntmachung des Hinweises auf die Patenterteilung: **16.08.2017**
(21) Anmeldenummer: 10162514.3
(22) Anmeldetag: 11.05.2010
(51) Int. Cl.: C12C 1/12, C12C 1/18, C12C 1/073

(54) **Verfahren zur Herstellung von Darrmalz sowie dessen Verwendung**
Method for producing and using kiln-dried malt
Procédé de fabrication de malt touraillé et son utilisation

(30) Priorität: 11.05.2009 DE 102009003007
(43) Veröffentlichungstag der Anmeldung: 17.11.2010
(73) Patentinhaber: IGV Institut für Getreideverarbeitung GmbH, 14558 Bergholz-Rehbrücke (DE)
(72) Erfinder: Volk, Jürgen, 14806 Belzig, (DE); Kretschmer, Thomas, 14558 Nuthetal OT Bergholz-Rehbrücke (DE); Schöber, Jürgen Josef, 15859 Storkow, (DE); Thormann, Christoph,, 06188 Landsberg, (DE); Hoppe, Hartmut,, 06366 Köthen, (DE); Rust, Harald,, 44797 Bochum, (DE); Schauermann, Peik Steffen,, 12587 Berlin, (DE)
(74) Vertreter: Gulde & Partner

(56) Entgegenhaltungen:
- EP-A1- 1 557 458
- EP-A2- 0 140 146
- EP-A2- 0 294 226
- DD-A5- 298 818
- DE-A1- 3 212 390
- DE-C2- 4 433 487
- SU-A1- 808 043
- ANONYMOUS: "Jahresbericht ILU e.V. 2009"[Online] 5. Februar 2010 (2010-02-05), Seiten 1-24, XP002592721 Institut für Lebensmittel- und Umweltforschung e.V. Gefunden im Internet: URL:http://www.ilu-ev.de/berichte/jb_ilu_2 009.pdf> [gefunden am 2010-07-20]
- ANONYMOUS: "Komplexe Vielfalt an Farbtiefen" BRAUINDUSTRIE, [Online] Bd. 1, Januar 2010 (2010-01), Seiten 12-15, XP002592723 Gefunden im Internet: URL:http://fzarchiv.sachon.de/Fachzeitschr iften/Getraenke-Fachzeitschriften/Brauindu strie/2010/01_10/BI_01-10_12-15_Komplexe_V ielfalt_an_Farbtiefen.pdf?kein=rewrite> [gefunden am 2010-09-08]
- ANONYMOUS: "16. Getreidenährmittel-Tagung in Detmold - eine Nachbetrachtung"[Online] 10. März 2010 (2010-03-10), Seiten 1-10, XP002592722 Arbeitsgemeinschaft Getreideforschung e.V. Gefunden im Internet: URL:http://www.agfdt.de/loads/taginfo/gnta ginf.pdf> [gefunden am 2010-07-20]

## Beschreibung

Die Erfindung betrifft ein Verfahren zur Herstellung von Darrmalz aus Grünmalz in einem Planetwalzenreaktor. Das Darrmalz wird vorzugsweise in Granulatform bereitgestellt. Der Energieaufwand für die Herstellung des Malzproduktes ist wesentlich geringer als für die konventionelle Malzherstellung.

Gegenstand der Erfindung ist ebenfalls die Verwendung des Darrmalzes zur Herstellung von farbintensiven Bieren, alkoholfreien Getränken, Extrakten und Back- und Süßwaren. Basis für die Herstellung von Malz können alle stärkehaltigen Agrarrohstoffe sein. Diese stärkehaltigen Rohstoffe können durch den Prozess der Vermälzung in einen back- und braufähigen Zustand versetzt werden. Im Allgemeinen hat die Mälzung das Ziel malztypische Farb- und Aromastoffe zu bilden. Der erste Schritt zum Vermälzen besteht dabei darin, dass zum Beispiel Getreide in sogenannten Weichgefäßen zwei Tage lang eingeweicht wird. Hierbei erhöht sich der Wassergehalt des Getreides auf etwa 45%. Nach dieser sogenannten Weiche kommt das Getreide in einen Keimkasten und wird dort unter genau eingestellten Bedingungen, wie Temperatur und Frischluftzufuhr, zur Keimung gebracht. Im Ergebnis der Keimung entsteht sogenanntes Grünmalz. Anschließend wird das Grünmalz bei erhöhter Temperatur getrocknet. Dieser als Darren bezeichneter Arbeitsschritt gliedert sich in der Regel in zwei Teile, nämlich das Schwelken und Abdarren. Beim Schwelken wird weitgehend die spätere Farbe des fertigen Malzes festgelegt. In Abhängigkeit vom Wassergehalt des Darrgutes entstehende Ausgangsprodukte bilden durch die beim Abdarren ablaufenden Maillard-Reaktionen die gewünschte Farbe des Malzes. Je höher die Darrgutfeuchte beim Schwelken ist, desto dunkler wird das spätere Malz ausfallen. Beim Abdarren wird der gewünschte Trocknungsgrad des fertigen Malzes eingestellt. Die Eigenschaften des Malzes beeinflussen den Geschmack des später gebrauten Bieres wesentlich. Je nach Getreidesorte, Dauer und Temperatur der Keimung, Wassergehalt vor dem Abdarren sowie Dauer und Temperatur des Abdarrens werden verschiedene Malzsorten hergestellt. Darrmalz, das gekeimte Produkt mit abgeschlossener Keimzeit und abgedarrt bei ∼80°C, besitzt in der Regel einen Wassergehalt kleiner 5 % und ist hell. Durch sehr hohe Temperaturen beim Abdarren können z. B. teilweise karamellisiertes oder verkohltes Malz gewonnen werden, das zu dunklem und sehr aromareichem Bier verarbeitet wird.

Die Trocknung (Darre) von gekeimtem Getreide kann auch durch Extrusion erfolgen. Die Extrusion ist ein Verfahren, bei dem das zu extrudierende Material bzw. Stoffgemisch in einem temperierten Zylinder mittels einer Schnecke gefördert und durch eine Matrize gepresst wird. Der Energieeintrag wird im Wesentlichen mechanisch durch Scherung in das Malz realisiert. Übliche Bauformen sind Einschnecken- und Doppelschneckenextruder (gleich- oder gegenläufig). Von Bedeutung für den Prozess ist die Konfiguration der eingesetzten Schneckengeometrie, neben vorwärts fördernden Elementen können diverse weitere Funktionen erfüllt werden (Mischelemente, Knetblöcke, rückfördernde Elemente). Die Kombination dieser Elemente hat einen wesentlichen Einfluss auf den Druckaufbau, die Druckverteilung und den mechanischen Energieeintrag, welcher die Hauptkomponente des Gesamtenergieeintrages ausmacht. Aufgrund der verhältnismäßig kleinen \Närmeaustauschfläche im Zylinder ist es der mechanische Energieeintrag, der einen wesentlichen Beitrag zum Aufschluss des Malzes liefert. Neben dem mechanischen Energieeintrag ist die druckorientierte Verfahrensführung maßgeblich für die Malzverarbeitung mittels Extrusion. Diese Verfahrensführung für die Malzverarbeitung sowie die Verwendung extrudierter Malzprodukte wird in unterschiedlichen Patenten dargestellt (EP 0 140 146 A2, DE 32 12 390 A1).

Ein weiteres effektives Verfahren ist die Herstellung von Malzprodukten mittels Walzentrockner. Walzentrockner sind Kontakttrockner, bei denen das zu trocknende Gut, meist viskose oder pastöse Flüssigkeiten/ Gemische, durch direkten Kontakt mit der beheizten Walze erhitzt bzw. getrocknet wird. Je nach Material erfolgt die Beschickung von oben bzw. durch Aufnahme an der Unterseite der Walze. Maßgeblich ist das Ausbringen eines gleichmäßigen, dünnen, aus Malz hergestellten Suspension-Filmes auf die beheizte Walze und die direkte Wärmeübertragung durch diese. Das Ausbringen bzw. gleichmäßige Verteilen des Filmes mit konstanter Stärke geschieht durch weitere Walzen bzw. Bleche. Sowohl das Aufbringen der Malzsuspension, als auch die Abnahme des getrockneten Materials erfolgt tangential über die gesamte Walzenlänge, eine Förderwirkung existiert lediglich entlang des Walzenumfangs in Umlaufrichtung. Die Abnahme erfolgt durch statische Klingen oder Schaber, deren Schneide parallel zur Walzenachse verläuft und tangential angelegt ist. Die Verweilzeit des Materials auf dem Walzentrockner beträgt nur einige Sekunden. Wesentlicher Nachteil dieses Verfahrens ist dass Walzentrockner den Einsatz von Slurry's mit einem Wassergehalt von 80 bis 90% erfordern. Malze können auf Walzentrocknern auch in vermahlener Form als feststoffreiche Suspension verarbeitet werden, um eine thermische Modifizierung herbeizuführen. Das wird für die Herstellung von Frühstückscerealien, Snacks angewendet.

Ein weiterer Nachteil der Walzentrockner sind offene Systeme. Dadurch besteht die Gefahr des Einschleppens von Verunreinigungen, was für die Weiterverarbeitung von Malzen (bioaktiven) vermieden werden muss.

Der Erfindung liegt deshalb die Aufgabe zugrunde, ein Verfahren zu finden, das es ermöglicht, enzymarme, aromareiche und farbintensive Malze hygienisch, in relativ kurzer Zeit und energieeffizient herzustellen.

Die Lösung der Aufgabe erfolgt mit einem Verfahren zur Herstellung von Darrmalz, wobei Grünmalz in einem Planetwalzenreaktor (PWL) weiterverarbeitet wird. Dabei wird der wesentliche Anteil der notwendigen Energie durch Wärmeleitung auf die Rohstoffe übertragen.

Ein erfindungsgemäß verwendeter Planetwalzenreaktor ist ein geschlossenes System umfasst im Wesentlichen eine temperierbare Einfüllzone, mindestens zwei temperierbare Planetwalzenmodule und eine angeflanschte Austragdüse.

Ein Planetwalzenreaktor besteht aus einem oder bis zu 8, vorzugsweise bis zu 4 Planetenwalzenmodulen, an die sich gegebenenfalls eine Granuliervorrichtung anschließt. Ein Planetwalzenmodul ist bevorzugt analog einem Planetengetriebe aufgebaut, und besteht aus einer umlaufenden beheizbaren Zentralspindel, mit der Zentralspindel kämmende und um die Zentralspindel umlaufende Planetenspindeln, die zugleich mit einem innen verzahnten Gehäuse kämmen.

Ein Modul umfasst einen innenverzahnten Walzenzylinder. Für das erfinderische Verfahren ist dies ein Gehäuse, das innen eine Buchse aufweist, die mit der geeigneten Verzahnung versehen ist. In speziellen Ausführungsformen sind Buchse und Gehäuse einstückig. Der Walzenzylinder ist außen und innen temperierbar. Dabei ist die mehrteilige Anordnung von verzahnter Buchse und Gehäuse von Vorteil, da eine Beaufschlagung mit Heizmedien dazwischen liegen kann, so die Außenbeheizung des Walzenzylinders gestattet und damit die erfinderische effektive Wärmeübertragung auf das Malz gewährleistet. Zur Innentemperierung und damit ebenfalls der direkten Wärmeübertragung auf das Malz dient die Zentralspindel. Die um die Zentralspindel rollierenden Planetenspindeln laufen üblicherweise einfach mit, während das Gehäuse und die Buchse still stehen.

Vorteilhafterweise besitzt der verwendete Planetwalzenreaktor zwei, drei oder vier Planetwalzenmodule (Planetwalzenelemente) mit einer gemeinsamen Zentralspindel. Jedes Modul besitzt ein separates innenverzahntes Gehäuse und separate Planetenspindeln. Dieses führt zu einem intensiven Vermischen und Auswalzen des Rohstoffes, um die effektive Energieübertragung zu ermöglichen. Gegebenenfalls kann die Zentralspindel auch mehrteilig sein, deren Einzellänge den Modulen entspricht. Vorzugsweise und in Abhängigkeit von der Höhe der gewünschten Energieübertragung werden Module eingesetzt, deren Länge zwischen 0,40 m und 1,20 m variieren kann. Der Durchmesser des Walzenzylinders beträgt zwischen 50 bis 700 mm je nach Maschinengröße (gewünschte Kapazität/Produktionsmenge) des Planetwalzenreaktors. Zwischen den Planetwalzenmodulen sind Anlaufringe angeordnet. Die Planetenwalzen laufen gegen den Anlaufring. In den Anlaufring sind Dispergierringe unterschiedlicher Größe eingesetzt. Die Dispergierringe bestimmen die offene Durchflussfläche für den Materialtransport in das nächste Planetwalzenmodul. Vor dem Dispergierring kommt es zu einem definierten Materialstau und zu einer Druckerhöhung.

Die Anzahl der Planetenspindeln ist abhängig von der Größe des gewünschten Hohlraums, welcher zwischen der Zentralspindel den umlaufenden Planetenspindeln und dem begrenzenden Walzenzylinder gebildet wird. Je geringer die Anzahl der Spindeln, desto größer ist der Hohlraum. Die Anzahl richtet sich auch nach dem Durchmesser des Planetenwalzenreaktors. Die Größe des Planetzenwalzenreaktors (Durchmesser) bestimmt die Produktionskapazität. Planetenwalzenreaktoren mit kleinen Durchmessern besitzen mindestens drei Planetenwalzen Planetwalzenreaktoren mit großen Durchmesser besitzen bis zu 24 Planetenwalzen. In der Regel werden 3 bis 24, vorzugsweise 6 bis 12, Spindeln eingesetzt. Die Planetenspindeln kämmen zugleich mit der Innenverzahnung des Gehäuses bzw. der Buchse. Sie laufen gegen den in Strömungsrichtung am Ende der Planetenspindeln angeordneten Anlaufring, der mit Öffnungen zum Entdampfen des Wassers versehen ist. Für das erfindungsgemäße Verfahren werden zwei bis acht Planetenwalzenmodule verwendet. Je Planetenwalzenmodul kommen mindestens 3 Planetenwalzen zur Anwendung. Die Anzahl der Planeten pro Planetenwalzenmodul kann variiert werden und kann von der Anzahl in den anderen Planetwalzenmodulen abweichen.

Die Verzahnung der Planetenspindeln kann unterschiedliche Beschaffenheit haben. Vorzugsweise wird bei der erfindungsgemäßen Malzherstellung ist eine Noppenverzahnung angewendet. Die Noppenverzahnung entsteht vorzugsweise aus der Normalverzahnung. Normalverzahnung von Planetspindeln ist einerseits durch einen Querschnitt gekennzeichnet, wie ihn die ineinandergreifenden Zähne der Zahnräder eines Getriebes zeigen. Anderseits verlaufen die Zähne nicht gerade sondern spindelförmig bzw. wie die Gewindegänge eines Schraubgewindes am Umfang entlang. Bei den Gewinden wird unterschieden zwischen linksgängem Gewinde und rechtsgängigem Gewinde.

Die gleiche Unterscheidung findet an den Planetenspindeln statt. Eine Noppenverzahnung entsteht, wenn z. B. in eine rechtsgängige Verzahnung eine linksgängig verlaufende Nut ähnlich einem Gewindegang eingearbeitet wird. Durch die Nut werden die Gewindegänge der Planetspindeln unterbrochen und es entstehen Noppen. Die Verwendung der Noppenspindeln führen zur gewünschten Homogenisierung der eingesetzten Malzrohmasse.

Vorzugsweise werden Planetwalzenreaktoren der Firma ENTEX Rust & Mischke GmbH, Bochum eingesetzt, die z. B. aus DE 44 33 487 C2 bekannt sind.

Die Planetwalzenmodule dienen erfindungsgemäß zum Aufschmelzen, Homogenisieren, Dispergieren und Weiterbefördern des Malzgutes.

Als bevorzugte Ausgangsstoffe für das erfindungsgemäße Verfahren dient Grünmalz von stärkehaltigen Agrarrohstoffen, z. B. von den Getreidearten Hafer, Gerste, Weizen, Roggen, Reis, Amaranth, Quinoa und Mais bzw. von den Leguminosen Erbsen, Ackerbohnen und Ölsaaten. Als Ölsaat werden Pflanzensamen bezeichnet, die zur Gewinnung von Pflanzenöl genutzt werden können, z. B. Soja, Raps, Sonnenblumenkerne und Erdnüsse.

Als Grünmalz wird ein gekeimtes Produkt mit abgeschlossener Keimzeit und ohne Darren bezeichnet, der Wassergehalt beträgt vorzugsweise 40 bis 47 %;
Der Rohstoff ist enzymhaltig. Grünmalz beinhaltet alle morphologischen Bestandteile (bei Getreide Spelzen und Keime, bei Leguminosen die Schalen). Als Ausgangsstoff können Getreide und alle anderen stärkereichen Rohstoffe verwendet werden.

Besonders bevorzugt ist die Verwendung von Gerste und Weizenmalz. Bevorzugt wird Sommergerste verwendet, die einen Proteingehalt bis 11% besitzt. Das erfindungsgemäße Verfahren ermöglicht auch die Verwendung proteinhaltigere Ausgangstoffe, z. B. Getreide mit vorzugsweise bis 16% Protein-Gehalt für die Mälzung.

Für das Verfahren ist es weder notwendig, das Ausgangsmalz zu zerkleinern noch Wurzelkeime zu entfernen.

Das Grünmalz wird über die Einfüllzone zugegeben. An die Einfüllzone wird deshalb vorzugsweise ein Unterdruck angelegt. Mit z.B. einer Einfüllschnecke wird das Malz in das Walzenteil gefördert. Die Malzmasse wird zwischen der Zentralspindel, den Planetenspindeln und dem innenverzahnten Gehäuse intensiv behandelt. Bei Drehung der Zentralspindel wälzen sich die Planetenspindeln auf der Zentralspindel und dem innenverzahnten Gehäuse ab und laufen planetenartig um. Bei diesem Vorgang bewirkt das Eintauchen eines jeden Spindelzahnes in den korrespondierenden Zahngrund eine Materialverdrängung. Aufgrund einer 45°-Schrägverzahnung erfolgt ein Vorwärtsströmen der Masse bei gleichzeitigem Auswalzen zu dünnen Schichten. Die durch das intensive Auswalzen entstandenen dünnen Schichten bilden definierte Karamellisierungs- und Maillard-Produkte.

Für das erfindungsgemäße Verfahren zur Herstellung von Darrmalz sind die Energieübertragung mittels Wärmeleitung durch die Zentralspindel und den Walzenzylinder, das Spiel zwischen den Planetwalzenmodulen, die Anzahl der Planetwalzenmodule, die Anzahl der Planetenspindeln, Verzahnung, Temperatur, Druck, Verweildauer und/oder Drehzahl der Spindeln an die Anforderungen des Darrmalzes hinsichtlich Farbtiefe und Aroma angepasst worden.

Wie bereits ausgeführt, weist ein Planetwalzenmodul eine innere (Zentralspindel) und äußere (Walzenzylinder) Temperaturzone auf. Aufgrund dieser zwei Temperierzonen ist eine exakte Temperaturführung, in dem jeweiligen Modul möglich.

Vorzugsweise werden Innen- und Außentemperatur gleichmäßig auf eine Temperaturstufe von vorzugsweise 100 bis 250°C eingestellt, so dass die Malzmasse auf einer Temperatur von 110 bis 210°C gehalten wird. Eine höhere Temperatur führt zu höheren Farbwerten und intensiveren Malzaromen.

Die bevorzugte Drehzahl der Spindeln beträgt 100 bis 300 U/min. Über die Drehzahl wird die Verweilzeit des Rohstoffes im Planetwalzenreaktor bestimmt. Eine längere Verweilzeit führt zu längerer Temperatureinwirkung und damit zu höheren Farbwerten und intensiveren Malzaromen.

Der Druck im Walzenzylinder beträgt bevorzugt 0 bis 500 N/_{cm}².

Die Verweilzeiten im Reaktor betragen bevorzugt 1 bis 5 Minuten. Die Farbe des Malzes wird in EBC-Einheiten (European Brewery Convention) ausgedrückt. Die Färbekraft ist die wichtigste Eigenschaft eines gedarrten Malzes.

Die durch das intensive Auswalzen entstandenen dünnen Schichten bilden Karamellisierungs- und Maillard-Produkte, die den eigentlichen Charakter des Produktes bestimmen.

Es werden lagerfähige, enzymarme, farbintensive und aromareiche Darrmalze gewonnen, die einen Wassergehalt unter 10 Gew. % aufweisen. Vorzugsweise besitzen sie einen Wassergehalt von 4 bis 6 %. Die Darrmalze werden vorzugsweise in Granulatform bereitgestellt. Die Rohstoffe können als Ganzkorn mit Feuchteanteilen von vorzugsweise 15 bis 50% verarbeitet werden. Ein energiereiches Zerkleinern und das Herstellen einer Slurry, wie es für das Walzentrocknen erforderlich ist, wird nicht notwendig.

Es wird erfindungsgemäß ein Darrmalz gewonnen, das einen bevorzugten EBC bis 1000 aufweist. Brenz- und Bittergeschmack des Malzes werden vermieden. Für die Gewinnung von einem Malz mit einem EBC unter 300 werden Verweilzeiten zwischen 1 bis 3 Minuten eingestellt.

Durch die Koagulation während des intensiven Walzens nimmt der Eiweißlösungsgrad gegenüber herkömmlichen Malzen deutlich ab (um etwa 30 bis 45%). Somit kann aus dem wasserhaltigen Malzgut im Planetenwalzreaktor ein farbintensives enzymarmes Darrmalz gewonnen werden.

Das Darrmalz wird vorzugsweise als Granulat bereitgestellt. Für eine solche Ausführung kann sich an den Planetenwalzenreaktor eine Granuliervorrichtung anschließen.

Das so gewonnene Darrmalz besitzt einen Wassergehalt von maximal 10 Gew.%, vorzugsweise 1-10 Gew.%, besonders bevorzugt 4-6 Gew.%. Es ist somit ausgezeichnet lagerfähig. Darüber hinaus ist es farbintensiv und aromareich und kann deshalb verschiedenen Anwendungsmöglichkeiten zugeführt werden.

Die erfindungsgemäße Anwendung eines Planetenwalzenreaktors ermöglicht eine Energieeinsparung von bis 53 % gegenüber der Einhordendarre. Darüber hinaus entfällt das nach sonstigen Verfahren zur Gewinnung von Darrmalz notwendige Malzputzen. Bei Verwendung von Grünmalz reduziert sich der gesamte Energiebedarf in vorteilhafter Weise um bis 60%.

Insbesondere wird es zur Herstellung farbintensiver dunkler Biere eingesetzt, indem es mit bis 20 Gew.% konventionellem Malz zugesetzt werden kann. Diese Einsatzhöhe erfordert keine gesonderte Zugabe von Enzymen zur Maische. Für die Herstellung besonders farbintensiver Biere beträgt der Anteil von z.B. gewalzten Granulaten 5 bis 10% des genannten Rohstoffs.

Desweiteren können die Malze zur Herstellung von alkoholfreien Getränken und Extrakten zur Herstellung derselben verwendet werden.

Auch für Back- und Süßwaren stellt das so gewonnene Darrmalz, da es enzymarm ist, einen guten Ausgangs- bzw. Zusatzstoff dar. Es ist besonders gut geeignet zur Herstellung von Backwaren, insbesondere von Brot und Kleingebäck, mit hervorragender Frischhaltung und gutem aromatischem Geschmack.

### Zusammenfassend ist festzustellen:

Im Gegensatz zu konventionellen Walzwerken (Walzentrockner) ist der Planetenwalzenreaktor ein geschlossenes System. Verunreinigungen und hygienisch fragwürdige Verfahrensschritte sind dadurch nahezu ausgeschlossen.

Das erzielte Produkt ermöglicht die Zuordnung als farbintensives enzymarmes Spezialmalz.

Der erfindungsgemäß eingesetzte Planetenwalzenreaktor unterscheidet sich von der herkömmlichen Extrusion beispielsweise im Doppelschneckenextruder im Prinzip der bevorzugten Energieeinleitung durch Wärmeübertragung (Leitung) und durch Nutzung großer Oberflächen. Diese Oberflächen werden durch um eine Zentralspindel angeordnete Planeten (Tochterwalzen) und der damit überrollfähigen Produktflächen erzielt.

Die grundsätzlichen Vorteile zur Herstellung von Darrmalz mit dem erfindungsgemäß verwendeten Planetenwalzenreaktor (PWR) sind wie folgt
1) Durch die große ausgewalzte Oberfläche wird das Wärmeübergangsverhalten der aufzuarbeitenden Masse schon bei der Homogenisierung und Dispergierung der Rohstoffe genutzt.
2) Die Energieeinleitungen auf die Rohstoffe erfolgt im wesentlichen durch eine effektive Wärmeleitung.
3) Für die qualitativ gleichbleibende Produktion wird die Mischtemperatur an allen Stellen der aufzuarbeitenden Masse gleichmäßig gehalten.
4) Der PWR weist eine nur geringe Friktion auf, so dass thermisch labile Prozesse gefahren werden können. Die Entstehung von Maillard- und anderen Bräunungsprozessen (Karamellisierung) erfolgt zu 90% durch die Energieübertragung der Zentralspindel und des Walzenzylinders, nach dem Prinzip Fläche (Verweilzeit) vor mechanischer Krafteinwirkung.
5) Die Knetelemente oder Knetblöcke der Ein- und Doppelschneckensysteme zeichnen sich durch unterschiedliche Strömungsgeschwindigkeiten aus, so dass unterschiedliche Schergeschwindigkeiten auftreten und so Inhomogenitäten entstehen. Beim PWR sind solche Irritationen völlig unbekannt und die Qualität konstant
6) In den Verfahrensteilen des PWR wird das Material homogenisiert und dispergiert. Durch die wiederholte Dünnschichtauswalzung und der dadurch entstehenden großen wärmetauschenden Oberfläche kann die Rohmasse bei der gewünschten Temperatur schonend durchmischt und homogenisiert werden. Das ermöglicht die sehr kurzen Verfahrenslängen (statt bis zu 60 D wie beim Doppelschneckenextruder reichen dazu beim Planetenwalzenreaktor 15 D).

Folgende bevorzugte Anwendungen sind vorteilhafter weise möglich:
1. Herstellung von farbintensiven Bieren und Getränken
2. Herstellung von malzaromatischen Bieren und Getränken
3. Verbesserung und Korrektur der Bierfarbe von farbschwachen Bieren und Getränken
4. Integration eines malztypischen Aromas und/oder Korrektur von Fehlaromen in Bieren und Getränken
5. Malzbasis für Homebrewsets
6. Herstellung von Fertigmischungen für Homebrewsets
7. Herstellung von Extrakten

Die Erfindung wird im Folgenden anhand von Zeichnungen und beispielhaften Beschreibungen näher erläutert.

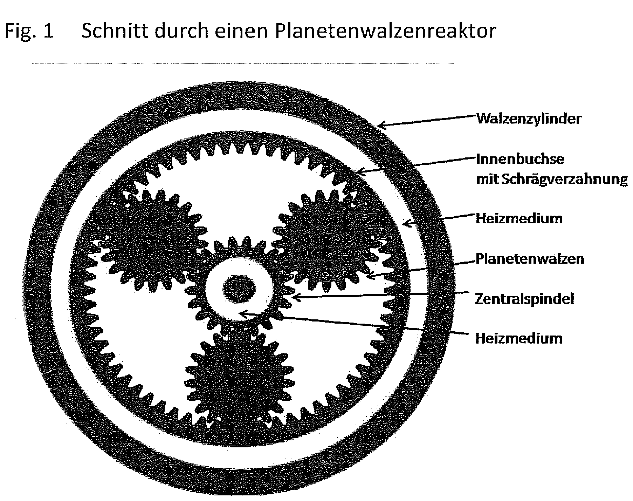

Es zeigen
- Fig. 1: einen erfindungsgemäß eingesetzten Planetenwalzenreaktor in einer schematischen Querschnittsdarstellung

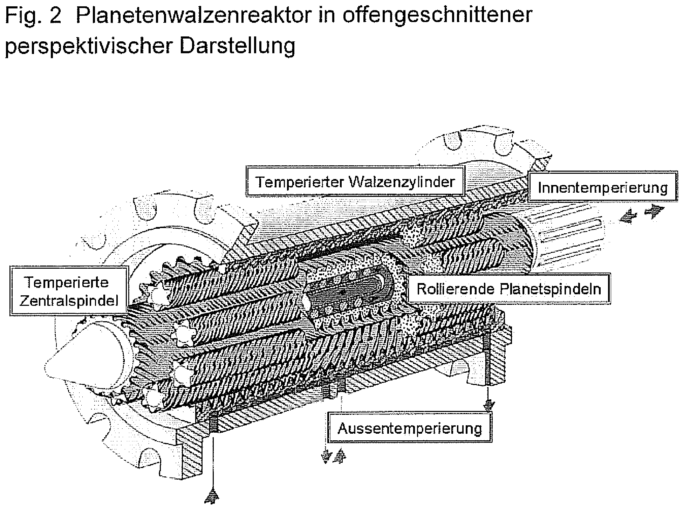

- Fig. 2: einen erfindungsgemäß eingesetzten Planetenwalzenreaktor in offengeschnittener perspektivischer Darstellung.

In den folgenden beispielhaften Verfahrensbeschreibungen werden das Mälzen und Darren und das Extrudieren in einem Doppelschneckenextruder gemäß dem bekannten Stand der Technik beschrieben. In einem dritten Verfahrensbeispiel wird der Ablauf der Grünmalzbehandlung in einem erfindungsgemäß eingesetzten Planetwalzenreaktor beschrieben.

### Vergleichsbeispiel 1 - Mälzen und Darren

Die herkömmliche Vermälzung von Getreide (Gerste, Weizen, Dinkel, Roggen) zu Braumalz erfolgt in erster Linie mit der Zielsetzung, ein komplettes Enzymsystem durch die Keimung zu aktivieren und zu synthetisieren und durch den enzymatischen Abbau von Zellwänden im Korn eine gewisse Porosität zu erreichen, die eine Verfügbarmachung der Malzinhaltsstoffe positiv beeinflusst. Ferner hat die Mälzung das Ziel, malztypische Farb- und Aromastoffe zu bilden. Die Vermälzung verläuft in der Reihenfolge: Weichen, Keimen, Trocknen und Darren. Hierbei wird zunächst das Getreide mit Wasser auf einen Wassergehalt von etwa 45% geweicht (60 Stunden). Anschließend wird das Korn über 7 Tage gekeimt.

Für die Herstellung von Spezialmalzen erfolgt eine beschleunigte Keimung innerhalb von 5 bis 6 Tagen, mit dem Ziel über höhere Keimtemperaturen von 18 bis 20°C einen höheren Anteil von für die Bildung von Maillard-Produkten erforderlichen Abbauprodukten von niedermolekularen Kohlenhydraten und Proteinen zu aktivieren. Das führt zu höheren Schwandverlusten (Verringerung des vergärungsfähigen Extraktes durch höhere Veratmung).

Der Keimung folgt eine Trocknung (Schwelken) bei Temperaturen von ca. 50°C bis auf einen Wassergehalt von 18 bis 20%. Die Bildung der Farb- und Aromastoffe geschieht beim Darren mit Temperaturen von 80°C für Pilsener Malz und Sauermalz bzw. bei 90 bis 110°C für Malze Münchner Typ, Wiener Typ und verschiedene Karamalze. Für die Herstellung von Röst- bzw. Farbmalzen wird sogar bis 230°C in speziellen Rösttrommeln gedarrt. Diese dunklen Malztypen weisen eine geringe bzw. keine Enzymaktivität auf. Diese Behandlungsstufe beträgt ca. 20 bis 22 Stunden, wobei der Wassergehalt auf unter 5% eingestellt wird. Die Einsatzmengen der Karamalze und artverwandte Malztypen beträgt in den Bieren 5 bis 10% zur eingesetzten Malzschüttung. Die Einsatzmenge von Röstmalzen zur Dunkelfärbung der Biere ist auf 1 bis 2% begrenzt.

Der Energieverbrauch für diesen verfahrenstechnischen Ablauf auf Einhordendarren für Pilsener Malz verteilt sich wie folgt:

| | |
|---|---|
| Weichen und Keimen: | 34,5 kWh/t |
| Trocknen: | 79,0 kWh/t |
| Darren: | 178,5 kWh/t |

### Vergleichsbeispiel 2 - Extrusion (Doppelschneckenextruder)

Die Extrusion ist ein Verfahren, bei dem das zu extrudierende Material bzw. Stoffgemisch in einem temperierten Zylinder mittels einer Schnecke gefördert und durch eine Matrize gepresst wird. Ebenfalls von Bedeutung für den Prozess ist die Konfiguration der eingesetzten Schneckengeometrie, neben vorwärts fördernden Elementen werden Mischelemente, Knetblöcke bzw. rückfördernde Elemente für das Erreichen einer reibungsbedingten Bräunung eingesetzt. Das in den Zylinder geführte Korn erfährt eine Erwärmung durch den beheizten Zylinder, der wesentliche Energieeintrag jedoch geschieht durch Reibungs- und Scherkräfte, welche über die bereits beschriebenen Schneckenelemente und den Druckaufbau im Austrittsbereich eingebracht werden. Die Temperierung des Zylinders dient somit weniger dem direkten Energieeintrag, als mehr der Absicherung regelbarer und damit konstanter Prozessbedingungen. Die tatsächliche Massetemperatur im Zylinder ist jedoch abhängig von den Parametern Füllgrad der Schnecken, Drehzahl der Schnecken und Schneckengeometrie und kann punktuell weit über die eingestellten Werte des Zylinders hinausgehen. Die Extrusion eignet sich sowohl zur Verarbeitung ganzer Körner, als auch Getreidemahlprodukten. Bei der Herstellung von farb- und aromaintensiven Produkten kann von der Rohstoffgrundlage ungemälzten Getreide als auch Getreideprodukten in teilgetrocknetem Zustand (Schwelkmalze) bzw. Darrmalzen ausgegangen werden. Der Wassergehalt solcher eingesetzten Grundstoffe beträgt 10 bis 25%. Der Energieaufwand für die Herstellung von Schwelkmalz als Ausgangsrohstoff mit einem Wassergehalt von 20% beträgt 30% vom gesamten Energiebedarf des Mälzens; wird ein Schwelkmalz mit 15% Wassergehalt als Rohstoff eingesetzt, beträgt der Energieaufwand etwa 50% des gesamten Energiebedarfes. Die Verwendung von Darrmalzen als Rohstoffgrundlage basiert auf dem abgerundeten Malzaroma als eine Grundlage für die Ausbildung aromareicher Malzstufen, vornehmlich bei helleren Spezialmalzen (Karamalz hell, Münchner Malz).

Für die Herstellung von Spezialmalzen mit dem Doppelschneckenextruder wird das Schwelkmalz (Wassergehalt 15%) von den Wurzelkeimen befreit und mit einer geeigneten Mühle auf eine Partikelgröße von 1 mm vermahlen. Die Extrusion dieses Mahlgutes erfolgt mit einer spezifische mechanische Energieeinleitung von 55 bis 90 Wh/kg und mit einer Massetemperatur von 173 bis 190°C.

### Beispiel 3 - erfindungsgemäßes Verfahren unter Einsatz eines Planetenwalzenreaktors

### a) Herstellung von einem hellen Karamelmalz (20 - 30 EBC)

Ausgangssubstanz ist Grünmalz einer Sommergerste mit einem Proteingehalt von 9% und einem Wassergehalt von rund 45 Gew. %

Es wird ein Planetenwalzenreaktor verwendet, der 3 Planetenwalzenmodule mit einer Länge von jeweils 0,4 m aufweist und einen Durchmesser von 70 mm. Die Verzahnung ist als 45° Schrägverzahnung ausgeführt. In allen drei Planetenwalzenmodulen werden 6 Planetenwalzen mit einer Noppenverzahnung verwendet. Die Temperatur in den Modulen (außen und innen) wird gleichmäßig bei 200° C gehalten, so dass die Massetemperatur bei 150 bis 170°C liegt. Die Input Schüttdichte an Grünmalz beträgt rund 600 kg/m³. Der Drehzahlbereich liegt bei 150 U/min. Die Verweilzeit im Reaktor beträgt 2,5 min.

Mit der Einfüllschnecke wird das Aufgabegut in Form eines unzerkleinerten Grünmalzes mit Wurzelkeimen in das Walzenteil gefördert. Bei Drehung der Zentralspindel wälzen sich die Planetenspindeln auf der Zentralspindel und der innenverzahnten Buchse ab und laufen planetenartig um.

Bei diesem Vorgang bewirkt das Eintauchen eines jeden Spindelzahnes in den korrespondierenden Zahngrund eine Materialverdrängung. Aufgrund der 45°-Schrägverzahnung erfolgt eine Vorwärtsströmung der Masse bei gleichzeitigem Auswalzen zu dünnen Schichten. Die Verdampfung des im Grundstoff enthaltenen Wassergehaltes erfolgt während des Auswalzens durch in die Anlaufringe integrierte Öffnungen unter den vorliegenden atmosphärischen Bedingungen.

Der Austrag der gewalzten Masse erfolgt in Form von expandierten Granulaten

| | |
|---|---|
| Drehzahlbereich | 150-160 U/min |
| Temperaturführung der Module und Spindel: | 200°C |
| Erzielte Massetemperatur: | 150 bis 170°C |
| Feuchteinput Grünmalz: | 40... 45% |
| Feuchteoutput Extrudat: | 4 ... 6% |
| Input Schüttdichte Grünmalz: | ∼600 kg/m³ |
| Output Schüttdichte Extrudat: | 150...500 kg/m³ |
| Erzielte Produktspektrum: | helles Karamelmalz |
| Aroma: | malzig, röstbrotartig, nussig |
| Erzielte Bierparameter: | helles Karamelmalzextrudat Extrakt 75 bis 78 % (entspricht Vergleichsbieren) |

### b Herstellung von einem Karamelmalz dunkel 100- 130 EBC

Ausgangssubstanz ist Grünmalz einer Sommergerste mit einem Proteingehalt von 9% und einem Wassergehalt von rund 45 Gew.%.

Es wird ein Planetenwalzenreaktor verwendet, der 3 Planetenwalzenmodule mit einer Länge von jeweils 0,4 m aufweist und einen Durchmesser von 70 mm. Die Verzahnung ist als 45° Schrägverzahnung ausgeführt. In allen drei Planetenwalzenmodulen werden 6 Planetenwalzen mit einer Noppenverzahnung verwendet. Die Temperatur in den Modulen (außen und innen) wird gleichmäßig bei 230°C gehalten, so dass die Massetemperatur bei 175 bis 210°C liegt. Die Input Schüttdichte an Grünmalz beträgt rund 600 kg/m³. Der Drehzahlbereich liegt bei 200 U/min. Die Verweilzeit im Reaktor beträgt 2,5 min.

| | |
|---|---|
| Drehzahlbereich | 200 bis 250 U/min |
| Temperaturführung der Module und Spindel: | 230°C |
| Erzielte Massetemperatur: | 175 bis 210°C |
| Feuchteinput Grünmalz: | 40... 45% |
| Feuchteoutput Extrudat: | 4 ... 6% |
| Input Schüttdichte Grünmalz: | ∼600 kg/m³ |
| Output Schüttdichte Extrudat: | 150...500 kg/m³ |
| Erzielte Produktspektrum: | Dunkles Karamelmalz |
| Aroma: | nussig |

Der Energiebedarf für die Herstellung beträgt 100 bis 350 Wh/kg thermische Energieeinleitung für Karamelmalz dunkel.

## Patentansprüche

1. Verfahren zur Herstellung von Malz aus Getreide durch Weichen, Keimen und Weiterverarbeitung in einem Extruder oder Walzentrockner, **dadurch gekennzeichnet, dass** Grünmalz in einem Planetwalzenreaktor (PWR) zu einem aromareichen und farbintensiven Darrmalz verarbeitet wird.

2. Verfahren nach Anspruch 1, **dadurch gekennzeichnet, dass** unzerkleinertes Grünmalz eingesetzt wird.

3. Verfahren nach einem der Ansprüche 1 oder 2, **dadurch gekennzeichnet, dass** die hergestellten Darrmalze in Granulatform zur Herstellung dunkler farbintensiver Biere verwendet werden, indem bis 20 Gew. % Darrmalz konventionellem Malz zugesetzt wird.

## Claims

1. A method for producing malt from grain by soaking, germination and further processing in an extruder or roller drier, **characterized in that** green malt is processed in a planetary roller reactor (PRR) to produce an aromatic and colour-intensive kiln-dried malt.

2. The method according to Claim 1, **characterized in that** unground green malt is used.

3. The method according to any one of claims 1 or 2, **characterized in that** the kiln-dried malts produced are used in granular form to produce dark colour-intensive beers by adding up to 20% by weight of kiln-dried malt to conventional malt.

## Revendications

1. Procédé pour la fabrication de malt à partir de céréales par trempage, germination et post-traitement dans une extrudeuse ou un sécheur à tambour, **caractérisé en ce que** du malt vert est transformé en malt touraillé riche en arômes et de couleur intense dans un réacteur à cylindre planétaire.

2. Procédé selon la revendication 1, **caractérisé en ce que** du malt vert non broyé est utilisé.

3. Procédé selon l'une des revendications 1 ou 2, **caractérisé en ce que** les malts touraillés produits sont utilisés sous forme de granulés pour la fabrication de bières brunes à la couleur intense, en ajoutant jusqu'à 20 % massique de malt touraillé à du malt conventionnel.
